(19) Europäisches Patentamt
European Patent Office
Office européen des brevets

(11) **EP 3 147 694 B1**

(12) **EUROPÄISCHE PATENTSCHRIFT**

(45) Veröffentlichungstag und Bekanntmachung des Hinweises auf die Patenterteilung:
**18.08.2021 Patentblatt 2021/33**

(51) Int Cl.:
***G01V 8/20*** *(2006.01)*

(21) Anmeldenummer: **16189443.1**

(22) Anmeldetag: **19.09.2016**

(54) **VERFAHREN ZUM BETREIBEN EINES PHOTOELEKTRISCHEN SENSORS UND PHOTOELEKTRISCHER SENSOR**

METHOD FOR OPERATING A PHOTOELECTRIC SENSOR AND PHOTOELECTRIC SENSOR

PROCEDE DE FONCTIONNEMENT D'UN CAPTEUR PHOTOELECTRIQUE ET CAPTEUR PHOTOELECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.09.2015 DE 102015116151**

(43) Veröffentlichungstag der Anmeldung:
**29.03.2017 Patentblatt 2017/13**

(73) Patentinhaber:
- **PROTECHNA Herbst GmbH & Co. KG**
  **85579 Neubiberg (DE)**
- **KARL MAYER STOLL R&D GmbH**
  **63179 Obertshausen (DE)**

(72) Erfinder: **Ferchau, Alfred**
**60389 Frankfurt (DE)**

(74) Vertreter: **Frese Patent PartGmbB**
**Patentanwälte**
**Hüttenallee 237 b**
**47800 Krefeld (DE)**

(56) Entgegenhaltungen:
**WO-A1-89/07276       WO-A1-2005/017471**
**DE-C1- 19 510 304**

**Beschreibung**

Die Erfindung betrifft ein Verfahren zum Betreiben eines photoelektrischen Sensors und einen photoelektrischen Sensor gemäß den Oberbegriffen der unabhängigen Ansprüche.

Photoelektrische Sensoren, auch als optoelektronische Sensoren bezeichnet, werden zur Erfassung von Objekten eingesetzt. Bei sogenannten Einweg-Sensoren wird dazu ein von einer Sendeeinheit ausgesandter Lichtstrahl in einer Empfangseinheit empfangen und als elektrisches Signal einer Auswertung zugeführt.

Aus der DE 10 2011 000 857 ist ein optoelektronischer Sensor zur Erfassung von Objekten mit einem Sendeblock zum Aussenden eines Lichtsignals und einem Empfangsblock zum Empfangen des Lichtsignals und Erzeugen eines Empfangssignals aus dem empfangenen Lichtsignal bekannt. Das Lichtsignal wird mit einer Codefolge moduliert, wobei in einer Korrelationseinheit ein Korrelationssignal aus dem Empfangssignal und der verwendeten Codefolge gebildet wird. Die Korrelationseinheit erhält die Codefolge. Alternativ findet eine nicht weiter erläuterte optische Synchronisation des Sendeblocks und des Empfangsblock statt.

In der DE 311 88 38 C2 ist eine photoelektrische Schalteinrichtung zur Erfassung eines Objektes im Strahlenpfad zwischen einer Lichtquelle und einem photoelektrischen Wandler beschrieben. Die Schalteinrichtung weist einen Lichtquellenteil, einen Lichtempfängerteil, einen Signalverarbeitungsteil und einen Hilfsteil zur Steuerung und Synchronisation der Betriebsweise des Lichtquellenteils und des Lichtempfängerteils auf. Der Lichtempfängerteil umfasst den photoelektrischen Wandler, der das darauf einfallende Licht in ein elektrisches Signal umsetzt. Um Eingabedaten, die auf dem elektrischen Signal basieren, zu verarbeiten, ist der Signalverarbeitungsteil mit einem Impulsformer versehen. Bei einer Verwendung der Schalteinrichtung, bei der die Lichtquelle und der Lichtempfänger getrennt voneinander angeordnet sind, wird der Lichtquellenteil mit einem separaten Oszillator verbunden. Die Frequenz dieses Oszillators ist etwas höher als die eines Oszillators, dessen Ausgangssignal als Taktsignal zur Einspeisung der Eingabedaten verwendet wird. Die Frequenz dieses Oszillators wird auf die Frequenz des separaten Oszillators synchronisiert. Bei derartigen Schalteinrichtungen führen bereits kurzfristige Störungen des Lichtstrahls, z. B. durch Fremdlicht oder durch eine Abdeckung, zu einer Unterbrechung der Synchronisierung. Eine Synchronisierung ist jedoch beim Einsatz von gepulsten Lichtstrahlen notwendig. Sie ermöglicht die Festlegung von Messzeitpunkten innerhalb der Impulse.

Die DE 195 10 304 beschreibt ein Lichtschrankengitter zur Erkennung eines Objektes im Strahlengang mit einer Sendeleiste und einer Empfängerleiste mit paarweise gegenüberliegenden Sendern und Empfängern. Um den Empfang eines Lichtimpulses von einem falschen, z.B. direkt neben dem richtigen Sender angeordneten, Sender zu vermeiden, werden die Paare zeitlich nacheinander aktiviert. Die Steuerungen der Sender und der Empfänger sind zur Takterzeugung mit gleichen Oszillatoren versehen. Zur Synchronisierung der Zeitmessung werden durch das erste Sender- und Empfängerpaar innerhalb einer festen Zeit TF von 8 Takten zwei Lichtimpulse gesendet und anhand von Pulsflanken erkannt. Die Zeitmessung der Empfänger beginnt mit dem ersten Lichtimpuls, wenn innerhalb der ersten Zeitspanne TF ein zweiter Lichtimpuls erkannt wird. In der zweiten Zeitspanne TF wird das zweite Sender- und Empfängerpaar aktiviert und so weiter. Für jedes Paar wird die Zeit, bzw. die Anzahl der Takte ermittelt, bis zu der der Lichtimpuls gesendet und empfangen wird. Stimmt die empfangene Bitfolge mit der gesendeten Sollbitfolge überein, war die Synchronisierung erfolgreich. Befindet sich ein Objekt teilweise im Strahlengang, so werden nicht bei allen Sender- und Empfängerpaaren Lichtimpulse empfangen. Stimmen die übrigen Bits mit denen der Sollbitfolge überein kann auf ein Objekt geschlossen werden. Zur Synchronisierung ist ein separates Sender- und Empfängerpaar eingesetzt. Der erste Empfänger erkennt die Aktivierung des ersten Senders und damit die nacheinander durchgeführten Aktivierungen der folgenden Sender. Die Aktivierung der Empfänger wird mit der Aktivierung der Sender synchronisiert. Es werden zur Synchronisation im ersten Sender- und Empfängerpaar zwei Synchronisationsimpulse gesendet und erkannt, wenn der zweite Lichtimpuls nach 4 Takten zum Zeitpunkt T4 auf den Empfänger trifft.

Die WO 2005/017471 beschreibt ein Verfahren zur Messung von Drehschwingungen an rotierenden Teilen mit Hilfe von Signalgebern. Zunächst werden ansteigende Signalflanken von Messsignalen eines Signalgebers in verformte ansteigende Signalflanken von zeitlich ansteigenden Messsignalen umgewandelt. Anschließend wird ein Messsignalpegel der verformten Anstiegsflanke bei zeitäquidistanter Abtastung der Messsignalfolgen erfasst. Danach wird ein zweiter Messsignalpegel der verformten Anstiegsflanke des nächstfolgenden Messsignals bei zeitäquidistanter Abtastung der Messsignalfolgen erfasst. Anhand der beiden erfassten Messsignalpegel der verformten Anstiegsflanken der zeitlich ansteigenden Messsignale werden zwei Zeitspannen zwischen der jeweiligen Startzeit des Messsignals und dem jeweiligen Abtastzeitpunkt errechnet. Abschliessend wird eine Differenzbildung der beiden Zeitspannen durchgeführt und dazu die Anzahl der Zeitspannen der Abtastzyklen zwischen den beiden erfassten Messsignalpegeln addiert. Aus dieser Berechnung von Differenzbildung und Addition ergibt sich ein ermitteltes Zeitintervall, das proportional zur Drehgeschwindigkeit des rotierenden Teils ist.

Aufgabe der Erfindung ist es, ein Verfahren und einen photoelektrischen Sensor zu entwickeln, wobei eine einfache und sichere Synchronisation der Auswertung eines gepulsten Lichtstrahles mit den Impulsen des gesendeten und empfangenen Lichtstrahls ermöglicht wird. Insbesondere soll die Erfassung von Messwerten des Empfangssignals, d.h. Messzeitpunkte, mit dem Empfangssignal synchronisiert werden.

Diese Aufgabe ist durch die Merkmale der unabhängigen Ansprüche gelöst.

Bei einem erfindungsgemäßen Verfahren zum Betreiben eines photoelektrischen Sensors wird durch eine Sendeeinheit des Sensors ein gepulster Lichtstrahl ausgesendet.

In einer Ausführungsform umfasst die Sendeeinheit einen Lasersender, der rotes Laserlicht aussendet. Alternativ werden Lichtstrahlen in einem davon verschiedenen sichtbaren oder nichtsichtbaren Frequenzbereich, zum Beispiel im Infrarotbereich, verwendet.

Der Lichtstrahl wird durch eine in Abstand zur Sendeeinheit angeordnete Empfangseinheit empfangen und in ein Empfangssignal umgewandelt. Die Empfangseinheit umfasst z. B. eine Photodiode. Messwerte des Empfangssignals werden durch eine Auswertevorrichtung erfasst. Die Erfassung der Messwerte wird durch die Auswertevorrichtung mit dem Empfangssignal synchronisiert.

Dabei werden durch einen Flankendetektor der Auswertevorrichtung Ereigniszeitpunkte positiver Flanken und/oder negativer Flanken von Impulsen des Empfangssignals ermittelt. Die Ermittlung jeweils mindestens einer Flanke der Impulse des Empfangssignals in Form von Ereigniszeitpunkten wird beispielsweise dazu verwendet werden, den Beginn und die Dauer, d.h. die Periode, eines Impulses abzuleiten. Ggf. wird auch ein Takt, in dem die Impulse gesendet werden, abgeleitet.

Durch eine Steuereinheit der Auswertevorrichtung, zu der die Ereigniszeitpunkte geleitet werden, wird nach einem Ereigniszeitpunkt ein folgender Ereigniszeitpunkt in einem Zeitintervall um einen erwarteten, folgenden Ereigniszeitpunkt bestimmt.

Ein folgender Ereigniszeitpunkt zum Beispiel einer positiven Flanke wird nach Ablauf einer Periode des Empfangssignals erwartet. Ein folgender Ereigniszeitpunkt wird daher nur dann als gültig erkannt, wenn er nahe der erwarteten Sendefrequenz liegt.

Die Auswahl eines Ereigniszeitpunktes lediglich in dem Zeitintervall um den erwarteten, folgenden Ereigniszeitpunkt hat den Vorteil, dass Fehlinformationen in der übrigen Zeit durch Störungen, z.B. durch Lichtblitze oder durch eine kurzfristige Abdeckung, unberücksichtigt bleiben.

Durch eine Steuereinheit der Auswertevorrichtung wird eine Synchronisation durchgeführt, wenn mindestens zwei aufeinander folgende Ereigniszeitpunkte bestimmt worden sind. Bei einer Synchronisation werden aus mindestens zwei aufeinander folgenden Ereigniszeitpunkten die oben beschriebenen Informationen, Periode und z.B. Beginn der Impulse, aus dem Empfangssignal abgeleitet.

Durch die Steuereinheit werden, ggf. aus diesen Informationen, Messzeitpunkte zur Erfassung der Messwerte aus den Ereigniszeitpunkten bestimmt. Dabei werden zum Beispiel aus der Periode und dem Beginn eines Impulses ein oder mehrere Messzeitpunkte im Verlauf eines Impulses, wie ein Messzeitpunkt zum Zeitpunkt einer maximalen Amplitude, bestimmt.

Eine Synchronisation wird bereits nach der Bestimmung von mindestens zwei aufeinander folgenden Ereigniszeitpunkten durchgeführt. Die Bestimmung der Messzeitpunkte und damit die Erfassung der Messwerte können sehr schnell beginnen.

Die Messzeitpunkte werden durch die Steuereinheit direkt aus dem Empfangssignal abgeleitet. Ein oder mehrere Oszillatoren und entsprechende Schaltungen sind nicht notwendig.

Eine Synchronisierung mit dem Empfangssignal hat außerdem den Vorteil, dass weder der Sendereinheit ein der Empfangseinheit bekannter Takt über eine Taktleitung vorgegeben werden muss noch ein die Sendeeinheit triggernder Takt über eine Taktleitung der Empfängereinheit bekannt gemacht werden muss. Eine zusätzliche Taktleitung zur Sendereinheit ist auch bei diesen Verfahren nicht notwendig.

In einer Ausführungsform werden in einem asynchronen Betriebszustand der Auswertevorrichtung Ereigniszeitpunkte ohne Erfassung von Messwerten ermittelt, bis eine erste Synchronisation durchgeführt wird.

In einer Ausführungsform wird im asynchronen Betriebszustand ein Ausgangswert als Wert des Zeitintervalls vorgegeben. Der Wert beträgt z.B. 30% der Periode eines Impulses.

In einer Ausführungsform werden in einem synchronen Betriebszustand der Empfangseinheit nach mindestens einer Synchronisation zu den bestimmten Messzeitpunkten die Messwerte erfasst.

In einer Ausführungsform wird in dem synchronen Betriebszustand nach einer weiteren Synchronisation ein Wert des Zeitintervalls reduziert. Das Zeitintervall wird verkürzt. Dadurch wird der Einfluss von Störungen verringert.

In einer Ausführungsform wird in einem auf einen synchronen Betriebszustand folgenden Übergangsbetriebszustand der Empfangseinheit, in dem in mindestens einem Zeitintervall um einen erwarteten, folgenden Ereigniszeitpunkt kein Ereigniszeitpunkt ermittelt wird, durch die Steuereinheit Messzeitpunkte entsprechend früherer Ereigniszeitpunkte bestimmt.

In einer Ausführungsform wird der Lichtstrahl durch die Sendeeinheit als in Rechteckform modulierte Impulse ausgesendet, wobei durch die Steuereinheit aus den Ereigniszeitpunkten jeweils ein Messzeitpunkt zur Ermittlung eines Messwertes einer maximalen Amplitude und ein Messzeitpunkt zur Ermittlung eines Messwertes einer minimalen Amplitude bestimmt werden.

In einer Ausführungsform werden aus den Messwerten der maximalen und der minimalen Amplitude deren Differenzen berechnet und ausgewertet. Eine Änderung der Differenz weist z.B. auf einen Überwachungsfall hin. Wenn beispielsweise mit einem erfindungsgemäßen photoelektrischen Sensor eine Fadenschar überwacht wird, zeigt eine bestimmte Änderung der Differenz eine kurze Verdunklung durch einen den Überwachungsweg durchlaufenden, gerissenen Faden an. Damit ist auch eine Erfassung von geringen Änderungen der Lichtintensität möglich.

Ein erfindungsgemäßer photoelektrischer Sensor ist zur Durchführung der erfindungsgemäßen Verfahren geeignet. Er weist die beschriebenen Merkmale und Vorteile der Verfahren entsprechend auf.

Ein photoelektrischer Sensor ist mit einer Sendeeinheit zur Aussendung eines gepulsten Lichtstrahls, mit einer im Abstand zur Sendeeinheit angeordneten Empfangseinheit zum Empfangen des Lichtstrahls und Umwandeln des Lichtstrahls in ein Empfangssignal und mit einer Auswertevorrichtung zur Erfassung von Messwerten des Empfangssignals und zur Synchronisierung der Erfassung der Messwerte mit dem Empfangssignal versehen.

Die Auswerteeinheit weist einen Flankendetektor auf, der dazu ausgebildet ist, Ereigniszeitpunkte positiver Flanken und/oder negativer Flanken von Impulsen des Empfangssignals zu ermitteln.

Die Auswertevorrichtung weist eine Steuereinheit auf, die mit dem Flankendetektor verbunden ist und die dazu ausgebildet ist, nach einem Ereigniszeitpunkt einen folgenden Ereigniszeitpunkt in einem Zeitintervall um den erwarteten, folgenden Ereigniszeitpunkt aus zu bestimmen. Die Steuereinheit ist dazu ausgebildet, eine Synchronisation durch zu führen, wenn mindestens zwei aufeinander folgende Ereigniszeitpunkte bestimmt worden sind. Sie ist dazu ausgebildet, Messzeitpunkte zur Erfassung der Messwerte aus den Ereigniszeitpunkten zu bestimmen.

In einer Ausführungsform ist die Sendeeinheit dazu ausgebildet, den Lichtstrahl als in Rechteckform modulierte Impulse auszusenden. Die Steuereinheit ist dazu ausgebildet, einen Messzeitpunkt zur Ermittlung eines Messwertes einer maximalen Amplitude und einen Messzeitpunkt zur Ermittlung eines Messwertes einer minimalen Amplitude des Empfangssignals zu bestimmen.

In einer Ausführungsform weist die Auswertevorrichtung einen Analog-Digital-Wandler zur Erfassung der Messwerte und zur Erzeugung digitaler Messwerte auf. Die Steuereinheit ist dazu ausgebildet, den Analog-Digital-Wandler zu aktivieren. Sie ist zur Aktivierung und zum Empfang der digitalen Messwerte mit dem Analog-Digitalwandler verbunden.

Die Erfindung wird anhand von in der Zeichnung schematisch dargestellter Beispiele weiter erläutert. Es zeigen:

Figur 1 eine schematische Ansicht einer Anordnung mehrerer erfindungsgemäßer photoelektrischer Sensoren;

Fig. 2 ein Blockdiagramm einer Empfangseinheit eines der photoelektrischen Sensoren; Fig. 3a und 3b ein Ablaufdiagramm eines erfindungsgemäßen Verfahrens zum Betreiben des photoelektrischen Sensors; und

Fig. 4 ein Empfangssignal des photoelektrischen Sensors.

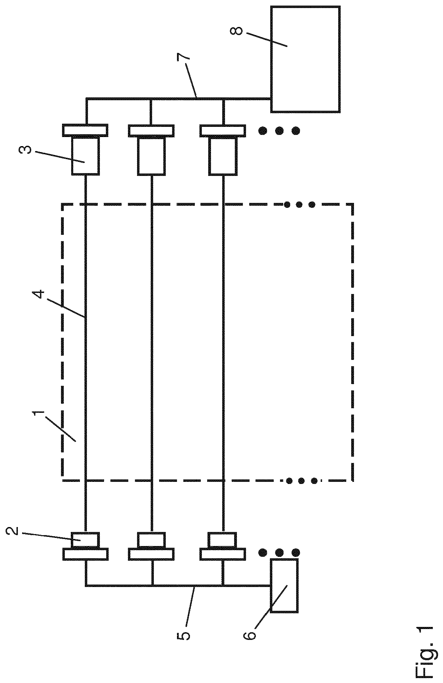

**Figur 1** zeigt mehrere erfindungsgemäße photoelektrische Sensoren, die im, gestrichelt eingezeichneten, Bereich 1 einer Fadenschar an einer nicht dargestellten Textilmaschine angeordnet sind. Jeder photoelektrische Sensor umfasst eine Sendeeinheit 2 und eine in einem Abstand zur Sendeeinheit 2 angeordnete Empfangseinheit 3.

Die Sendeeinheit 2 ist dazu ausgebildet, einen gepulsten Lichtstrahl 4 auszusenden. Der Lichtstrahl 4 ist durch in Rechteckform modulierte Impulse gebildet. Die Sendeeinheit 2 weist einen Lasersender auf, der rotes Licht, z. B. mit einer Wellenlänge von etwa 750nm aussendet. Die photoelektrischen Sensoren sind so im Bereich 1 der Fadenschar angebracht, dass ein gerissener, herab fallender Faden den Lichtstrahl 4 mindestens eines Sensors durchquert.

Die Sendeeinheiten 2 sind über eine Stromleitung 5 an eine Stromquelle 6 angeschlossen. Die Stromquelle 6 stellt Strom zum Beispiel mit einer Spannung von 24 V zur Verfügung. Die Empfangseinheiten 3 sind über eine Kommunikationsleitung 7 mit einer Steuerung 8 der Textilmaschine verbunden.

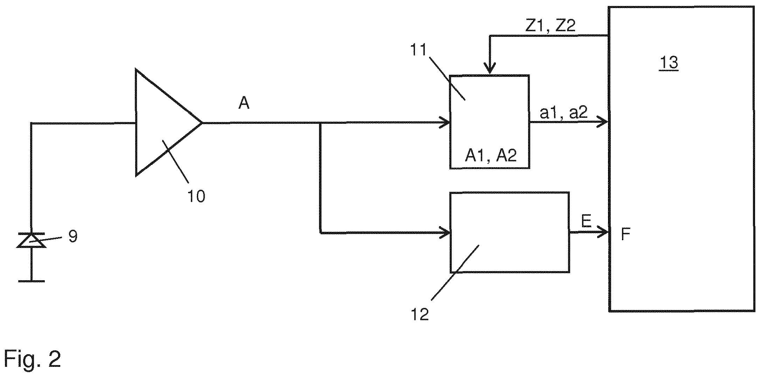

**Figur 2** zeigt ein Blockdiagramm der Empfangseinheit 2 eines photoelektrischen Sensors, die dazu ausgebildet ist, den Lichtstrahl 4 zu empfangen und in diesem Beispiel auch auszuwerten.

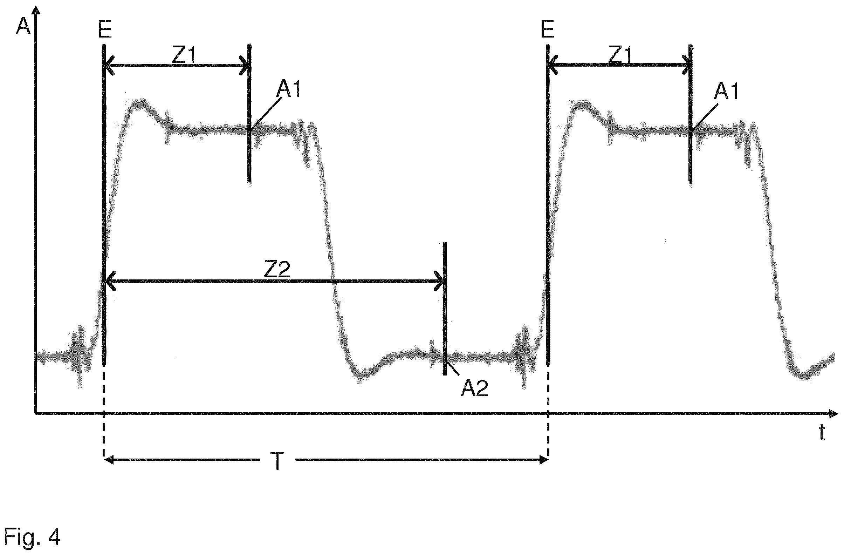

Die Empfangseinheit 2 weist eine Empfangsvorrichtung zur Umwandlung des Lichtstrahls 4 in ein Empfangssignal A auf, das ausschnittsweise in Figur 4 dargestellt ist. Die Empfangsvorrichtung umfasst eine Photodiode 9 zur Umwandlung des Lichtstrahls 4 in ein elektrisches Signal und einen Verstärker 10 zur Verstärkung des elektrischen Signals in das Empfangssignal A.

Die Empfangseinheit 2 weist eine Auswertevorrichtung zur Erfassung von Messwerten A1, A2 des Empfangssignals A und zur Synchronisierung der Erfassung der Messwerte A1, A2 mit dem Empfangssignal A auf. Die Auswertevorrichtung umfasst einen Analog-Digital-Wandler 11, einen Flankendetektor 12 und eine Steuereinheit 13.

Der Analog-Digital-Wandler 11 ist dazu ausgebildet, die Messwerte A1, A2 des analogen Empfangssignal A zu erfassen und in digitale Messwerte a1, a2 umzuwandeln. In diesem Beispiel werden jeweils ein Messwert A1 der maximalen Amplitude und ein Messwert A2 der minimalen Amplitude des Rechteckimpulses erfasst (Figur 4).

Der Flankendetektor 12 ist dazu ausgebildet, Ereigniszeitpunkte E positiver Flanken der Impulse des Empfangssignals A zu ermitteln.

Der Verstärker 10 ist zur Übermittlung des Empfangssignals A mit einem Eingang des Analog-Digital-Wandlers 11 und mit einem Eingang des Flankendetektors 12 verbunden.

Die Steuereinheit 13 ist zur Synchronisierung und zur Auswertung der Messwerte A1, A2 ausgebildet.

Ein Ausgang des Analog-Digital-Wandlers 11 ist zur Weiterleitung von aus dem analogen Empfangssignal A erfassten und umgewandelten, digitalen Messwerten a1, a2 mit der Steuereinheit 13 verbunden.

Die Steuereinheit 13 ist über einen Aktivierungseingang zur Übermittlung von Messzeitpunkten Z1, Z2 mit dem Analog-Digital-Wandler 11 verbunden. Die Steuereinheit 13 ist dazu ausgebildet, den Analog-Digital-Wandler 11 zu den Messezeitpunkten Z1, Z2 zu aktivieren.

Ein Ausgang des Flankendetektors 12 ist zur Weiterleitung der Ereigniszeitpunkte E mit der Steuereinheit 13 verbunden.

Die Steuereinheit 13 ist dazu ausgebildet, Ereigniszeitpunkte E von dem Flankendetektor 12 zu empfangen und ggf. als zur Synchronisation geeignet zu bestimmen. Nach Erhalt eines ersten Ereigniszeitpunktes E wird durch die Steuereinheit 13 ein folgender Ereigniszeitpunkt E bestimmt, wenn er in einem Zeitintervall F um einen erwarteten, folgenden Ereigniszeitpunkt E liegt.

Die Steuereinheit 13 ist dazu ausgebildet, eine Synchronisation durchzuführen. Eine Synchronisierung erfolgt, wenn mindestens zwei aufeinander folgende Ereigniszeitpunkte E bestimmt worden sind.

Die Steuereinheit 13 ist zur Auswertung der Messwerte A1, A2 ausgebildet. Es wird beispielsweise jeweils eine Differenz zwischen den Messwerten A1, A2 der maximalen und minimalen Amplitude berechnet und mit vorherigen Differenzen verglichen. Verringert sich die Differenz um einen vorgegebenen Betrag, bei dem zum Beispiel ein gerissener Faden vermutet wird, erzeugt die Steuereinheit 13 ein Alarmsignal.

Die Steuereinheit 13 umfasst einen oder mehrere Mikroprozessoren. Sie umfasst Zeitgeberelemente zur Aktivierung des Analog-Digital-Wandlers 11 sowie Rechenelemente zur Bestimmung z.B. des Beginns und des Endes des Zeitintervalls und der Messzeitpunkte Z1, Z2, sowie zur Auswertung der Messwerte A1, A2. Diese Elemente sind als Schaltungen und/oder Programmabschnitte ausgebildet.

In Betrieb eines erfindungsgemäßen photoelektrischen Sensors wird durch die Sendeeinheit 2 ein Lichtstrahl 4 als in Rechteckform modulierte Impulse ausgesendet. Der Lichtstrahl 4 wird durch die in Abstand zur Sendeeinheit 2 angeordnete Empfangseinheit 3 empfangen. Durch die Empfangsvorrichtung der Empfangseinheit 3, nämlich durch die Photodiode 9 und den Verstärker 10, wird der Lichtstrahl 4 in ein analoges Empfangssignal A umgewandelt. Durch die Auswertevorrichtung werden die Messwerte A1, A2 des Empfangssignals A erfasst und ausgewertet. Ggf. wird ein Alarmsignal erzeugt, das über die Kommunikationsleitung 7 zu der Steuerung 8 der Textilmaschine geleitet wird.

Zur Synchronisation werden Ereigniszeitpunkte E positiver Flanken der Impulse des Empfangssignals A durch den Flankendetektor 12 ermittelt und an die Steuereinheit 13 geleitet.

Wenn durch die Steuereinheit 13 mindestens zwei aufeinander folgende Ereigniszeitpunkte E bestimmt worden sind, d.h. eine Synchronisation durchgeführt worden ist, werden aus den Ereigniszeitpunkten E Messzeitpunkte Z1, Z2 bestimmt. Durch die Steuereinheit 13 wird nach einem Ereigniszeitpunkt E ein folgender Ereigniszeitpunkt nur dann bestimmt, wenn er in dem Zeitintervall F um einen erwarteten folgenden Ereigniszeitpunkt E ermittelt worden ist.

Aus den Ereigniszeitpunkten E wird durch die Steuereinheit 13 eine Periode T der Impulse abgeleitet und mit Hilfe der Periode T Beginn und Ende des Zeitintervalls F, in dem ein folgender Ereigniszeitpunkt E berücksichtigt wird, sowie die Messzeitpunkte Z1, Z2 berechnet.

Durch den Analog-Digital-Wandler 11 werden die Messwerte A1, A2 erfasst und für die Steuereinheit 13 in digitale Messwerte a1, a2 umgewandelt.

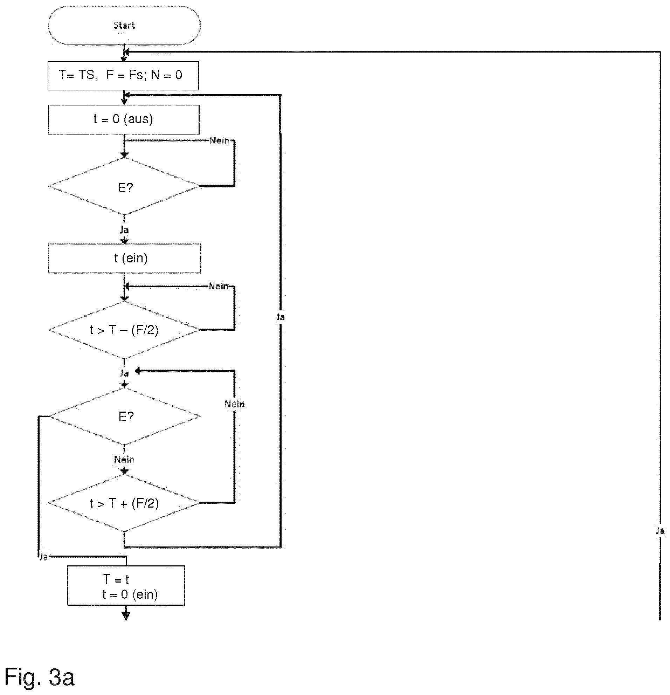

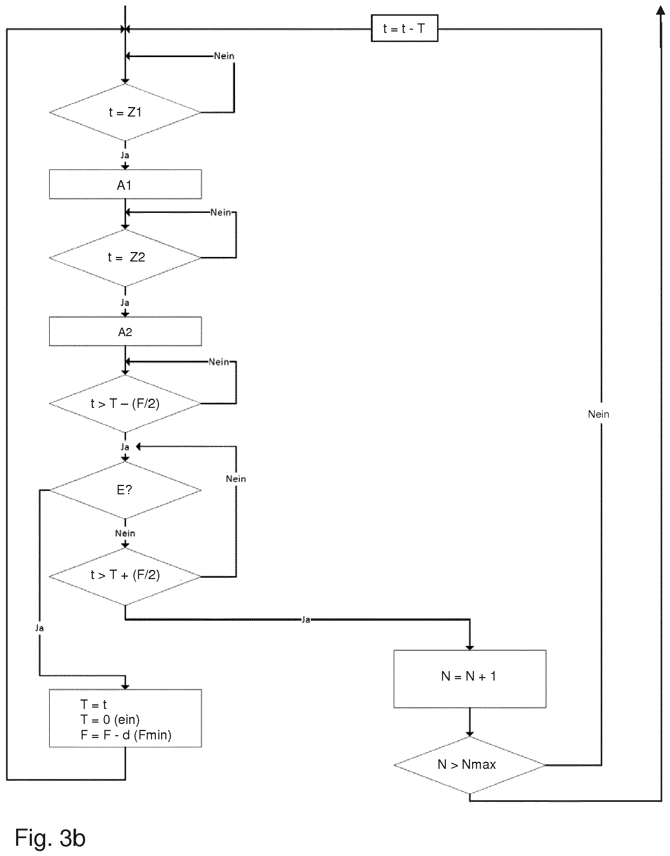

In den Figuren 3a und 3b wird der Ablauf einer Synchronisierung weiter veranschaulicht.

Bei einem Start einer Synchronisierung werden zunächst in einem asynchronen Betriebszustand der Empfangseinheit 3 Ereigniszeitpunkte E ohne Erfassung von Messwerten A1, A2 ermittelt, bis eine Synchronisation durchgeführt wird.

Die Periode T der Impulse und das Zeitintervall F erhalten durch die Steuereinheit 13 vorgegebene Startwerte Ts und Fs. Eine Zahl N der Perioden T in einem Übergangsbetriebszustand wird durch die Steuereinheit 13 auf Null gesetzt.

Durch die Steuereinheit 13 wird eine Zeitvariable t auf Null gesetzt.

Die Steuereinheit 13 wartet auf einen Ereigniszeitpunkt E des Flankendetektors 12.

Wenn der Flankendetektor 12 eine positive Flanke des Empfangssignals A erkennt, wird durch ihn ein Ereigniszeitpunkt E ermittelt und an die Steuereinheit 13 geleitet.

Eine Zeitmessung mit der Zeitvariablen t wird durch die Steuereinheit 13 gestartet.

Durch die Steuereinheit 13 wird ein Zeitintervall F von

$$\text{Beginn: } t > T - (F/2) \quad \text{bis Ende: } t > T + (F/2) \text{ berechnet.}$$

Wenn in diesem Zeitintervall F durch den Flankendetektor 12 keine positive Flanke eines folgenden Impulses erkannt wird, und damit kein folgender Ereigniszeitpunkt E ermittelt wird, wird durch die Steuereinheit 13 die Zeitvariable t auf Null gesetzt.

Die Empfangseinheit 2 bleibt im asynchronen Betriebszustand. Die Steuereinheit 13 wartet auf einen Ereigniszeitpunkt E des Flankendetektors 12.

Wenn in dem Zeitintervall F durch den Flankendetektor 12 eine positive Flanke eines folgenden Impulses erkannt wird und damit ein folgender Ereigniszeitpunkt E ermittelt wird, wird eine Synchronisation durchgeführt. Die Periode T erhält den Wert der Zeitvariable t zum folgenden Ereigniszeitpunkt E. Die Zeitvariable t wird auf Null gesetzt.

Eine neue Zeitmessung mit der Zeitvariablen t wird gestartet.

Die Synchronisierung wird nun in einem synchronen Betriebszustand der Empfangseinheit 2 durchgeführt.

Durch die Steuereinheit 13 wird der Analog-Digital-Wandler 11 zum Zeitpunkt Z1 der Zeitvariablen t zur Erfassung des Messwertes A1 der maximalen Amplitude aktiviert. Der Messwert A1 wird zu dem Messwert a1 digitalisiert und an die Steuereinheit 13 geleitet.

Durch die Steuereinheit 13 wird der Analog-Digital-Wandler 11 zum Zeitpunkt Z2 der Zeitvariablen t zur Erfassung des Messwertes A2 der minimalen Amplitude aktiviert. Der Messwert A2 wird zu dem Messwert a2 digitalisiert und an die Steuereinheit 13 geleitet.

Durch die Steuereinheit 13 wird ein Zeitintervall F von

$$t > T - (F/2)$$

bis

$$t > T + (F/2)$$

berechnet.

Wenn in dem Zeitintervall F durch den Flankendetektor 12 eine positive Flanke eines folgenden Impulses erkannt wird und damit ein folgender Ereigniszeitpunkt E ermittelt wird, wird die Synchronisierung weiter im synchronen Betriebszustand der Empfangseinheit 2 durchgeführt. Die Periodendauer T erhält den Wert der Zeitvariable t zum letzten Ereigniszeitpunkt E und die Zeitvariable t wird auf Null gesetzt.

Der Wert des Zeitintervalls F wird um einen Wert d bis zu einem minimalen Wert Fmin reduziert.

Wenn in diesem Zeitintervall F durch den Flankendetektor 12 keine positive Flanke eines folgenden Impulses erkannt wird und damit kein Ereigniszeitpunkt E ermittelt wird, wird die Zahl N der Perioden T im Übergangsbetriebszustand durch die Steuereinheit 13 um 1 erhöht. Wenn die Zahl N kleiner oder gleich einer maximalen Zahl Nmax bleibt die Empfangseinheit 2 im Übergangsbetriebszustand.

Die Zeitvariable t wird durch die Steuereinheit 13 um die zuletzt bestimmte Periode T reduziert:

$$t = t - T.$$

Die Messwerte A1, A2 werden, wie für den synchronen Betriebszustand beschrieben, erfasst.

Wenn in dem Zeitintervall F durch den Flankendetektor 12 eine positive Flanke eines folgenden Impulses erkannt wird und damit ein folgender Ereigniszeitpunkt E ermittelt wird, wird die Synchronisierung weiter im synchronen Betriebszustand der Empfangseinheit 2 durchgeführt.

Wenn in dem Zeitintervall F durch den Flankendetektor 12 keine positive Flanke eines folgenden Impulses erkannt wird und damit kein Ereigniszeitpunkt E ermittelt wird, bleibt die Empfangseinheit 2 im Übergangsbetriebszustand.

Wenn die Zahl N größer ist als die maximale Zahl Nmax wird die Empfangseinheit 2 durch die Steuereinheit 13 in den asynchronen Betriebszustand versetzt. Die Steuereinheit 13 startet eine neue Synchronisierung im asynchronen Betriebszustand.

In einer Alternative wird eine Synchronisation durchgeführt, wenn mindestens drei aufeinander folgende Ereigniszeitpunkte E durch die Steuereinheit 13 ermittelt worden sind.

In einer Alternative umfasst die Auswertevorrichtung einen Flankendetektor 12 zur Ermittlung von Ereigniszeitpunkten E positiver und/oder negativer Flanken der Impulse des Empfangssignals A. Die Messzeitpunkte zur Erfassung von Amplitudenwerten werden entsprechend angepasst.

In einer Alternative sind die Auswertevorrichtung oder einzelne Teile der Auswertevorrichtung, zum Beispiel die Steuereinheit 13, als separate Vorrichtungen ausgebildet, die nicht von der Empfangseinheit umfasst sind.

In einer Alternative werden Abfragen, z. B. zur Ermittlung von Ereigniszeitpunkten, in einer Frequenz von 10 bis 20K Hz durchgeführt.

Bezugszeichenliste

| | |
|---|---|
| 1 | Bereich einer Fadenschar |
| 2 | Sendeeinheit |
| 3 | Empfangseinheit |
| 4 | Lichtstrahl |
| 5 | Stromleitung |
| 6 | Stromquelle |
| 7 | Kommunikationsleitung |
| 8 | Steuerung der Textilmaschine |
| 9 | Photodiaode |
| 10 | Verstärker |
| 11 | Analog-Digital-Wandler |
| 12 | Flankendetektor |
| 13 | Steuereinheit |

| | |
|---|---|
| A | Empfangssignal |
| A1 | analoger Messwert |
| A2 | analoger Messwert |
| a1 | digitaler Messwert |
| a2 | digitaler Messwert |
| E | Ereigniszeitpunkt |
| F | Zeitintervall |
| Fmin | minimaler Wert des Zeitintervalls |
| Fs | Startwert des Zeitintervalls |
| N | Zahl der Perioden im Übergangszustand |
| Nmax | maximale Zahl der Perioden im Übergangszustand |
| t | Zeit |
| T | Periode |
| Ts | Startwert der Periode |
| Z1 | Messzeitpunkt |
| Z2 | Messzeitpunkt |

**Patentansprüche**

**1.** Verfahren zum Betreiben eines photoelektrischen Sensors, bei dem ein gepulster Lichtstrahl (4) durch eine Sendeeinheit (2) ausgesendet wird, der durch eine in Abstand zur Sendeeinheit angeordnete Empfangseinheit (3) empfangen und in ein Empfangssignal (A) umgewandelt wird, bei dem Messwerte (A1, A2) des Empfangsignals (A) durch eine Auswertevorrichtung erfasst werden, und bei dem die Erfassung der Messwerte (A1, A2) mit dem Empfangssignal (A) synchronisiert wird, und bei dem durch einen Flankendetektor (12) der Auswertevorrichtung Ereigniszeitpunkte (E) positiver Flanken und/oder negativer Flanken von Impulsen des Empfangssignals (A) ermittelt werden,
durch eine Steuereinheit (13) der Auswertevorrichtung, zu der die Ereigniszeitpunkte (E) geleitet werden, nach einem Ereigniszeitpunkt (E) ein folgender Ereigniszeitpunkt (E) in einem Zeitintervall (F) um einen erwarteten, folgenden Ereigniszeitpunkt (E) bestimmt wird,
durch die Steuereinheit (13) eine Synchronisation durchgeführt wird, wenn mindestens zwei aufeinander folgende Ereigniszeitpunkte (E) bestimmt worden sind, und durch die Steuereinheit (13) Messzeitpunkte (Z1, Z2) zur Erfassung der Messwerte (A1, A2) aus den Ereigniszeitpunkten (E) bestimmt werden.

**2.** Verfahren nach Anspruch 1, **dadurch gekennzeichnet, dass** in einem asynchronen Betriebszustand der Empfangseinheit (2) Ereigniszeitpunkte (E) ohne Erfassung von Messwerten (A1, A2) ermittelt werden, bis eine Synchronisation durchgeführt wird.

3. Verfahren nach Anspruch 1 oder 2, **dadurch gekennzeichnet, dass** in einem synchronen Betriebszustand der Empfangseinheit (2) nach zumindest einer Synchronisation die Messwerte (A1, A2) zu den bestimmten Messzeitpunkten (Z1, Z2) erfasst werden.

4. Verfahren nach Anspruch 3, **dadurch gekennzeichnet, dass** in dem synchronen Betriebszustand nach einer weiteren Synchronisation durch die Steuereinheit (13) ein Wert (F) des Zeitintervalls reduziert wird.

5. Verfahren nach Anspruch 3 oder 4, **dadurch gekennzeichnet, dass** in einem auf einen synchronen Betriebszustand folgenden Übergangsbetriebszustand der Empfangseinheit (2), in dem in mindestens einem Zeitintervall (F) um einen erwarteten, folgenden Ereigniszeitpunkt (E) kein Ereigniszeitpunkt (E) ermittelt wird, durch die Steuereinheit (13) Messzeitpunkte (Z1, Z2) entsprechend früherer Ereigniszeitpunkten (E) bestimmt werden.

6. Verfahren nach einem der Ansprüche 1 bis 5, **dadurch gekennzeichnet, dass** der Lichtstrahl (4) als in Rechteckform modulierte Impulse ausgesendet wird, wobei durch die Steuereinheit (13) aus den Ereigniszeitpunkten (E) jeweils ein Messzeitpunkt (Z1) zur Ermittlung eines Messwertes (A1) einer maximalen Amplitude und ein Messzeitpunkt (Z2) zur Ermittlung eines Messwertes (A1) einer minimalen Amplitude des Empfangssignals (A) bestimmt werden.

7. Photoelektrischer Sensor mit einer Sendeeinheit (2) zur Aussendung eines gepulsten Lichtstrahls, mit einer im Abstand zur Sendeeinheit angeordneten Empfangseinheit (3) zum Empfangen des Lichtstrahls (4) und Umwandeln des Lichtstrahls (4) in ein Empfangssignal (A), und mit einer Auswertevorrichtung zur Erfassung von Messwerten (A1, A2) des Empfangssignals (A) und zur Synchronisierung der Erfassung der Messwerte (A1, A2) mit dem Empfangssignal (A), wobei die Auswerteeinheit einen Flankendetektor (12) aufweist, der dazu ausgebildet ist, Ereigniszeitpunkte (E) positiver Flanken und/oder negativer Flanken von Impulsen des Empfangssignals (A) zu ermitteln und die Auswertevorrichtung eine Steuereinheit (13) aufweist, die mit dem Flankendetektor (12) zum Empfang der Ereigniszeitpunkte (E) verbunden ist und die dazu ausgebildet ist, nach einem Ereigniszeitpunkt (E) einen folgenden Ereigniszeitpunkt (E) in einem Zeitintervall (F) um einen erwarteten, folgenden Ereigniszeitpunkt (E) zu bestimmen, eine Synchronisation durch zu führen, wenn mindestens zwei aufeinander folgende Ereigniszeitpunkte (E) bestimmt worden sind, und Messzeitpunkte (Z1, Z2) zur Erfassung der Messwerte (A1, A2) aus den Ereigniszeitpunkten (E) zu bestimmen.

8. Photoelektrischer Sensor nach Anspruch 7, **dadurch gekennzeichnet, dass** die Sendeeinheit (2) dazu ausgebildet ist, den Lichtstrahl (4) als in Rechteckform modulierte Impulse auszusenden, wobei die Steuereinheit (13) dazu ausgebildet ist, einen Messzeitpunkt (Z1) zur Ermittlung eines Messwertes (A1) einer maximalen Amplitude und einen Messzeitpunkt (Z2) zur Ermittlung eines Messerwertes (A2) einer minimalen Amplitude des Empfangssignals (A) zu bestimmen.

## Claims

1. Method for operating a photoelectric sensor, wherein a pulsed light beam (4) is sent by a sending unit (2), which is received by a receiving unit (3) arranged at a distance from the sending unit and converted into a received signal (A), wherein measurement values (A1, A2) of the received signal (A) are recorded by an evaluation device, and wherein the recording of the measurement values (A1, A2) is synchronised with the received signal (A), and wherein event times (E) of positive flanks and/or negative flanks of pulses of the received signal (A) are identified by a flank detector (12) of the evaluation device,
a subsequent event time (E) is determined during a time interval (F) around an expected subsequent event time (E) by a controller (13) of the evaluation device, to which the event times (E) are sent after an event time (E), synchronisation is carried out by the controller (13) if at least two successive event times (E) have been determined, and measurement times (Z1, Z2) are determined for recording measurement values (A1, A2) from the event times (E) by the controller (13).

2. Method according to claim 1, **characterised in that** event times (E) are identified in an asynchronous operating condition of the receiving unit (2) without recording measurement values (A1, A2) until synchronisation is carried out.

3. Method according to claim 1 or 2, **characterised in that** the measurement values (A1, A2) are recorded at the determined measurement times (Z1, Z2) after at least one synchronisation in a synchronous operating condition of the receiving unit (2).

**4.** Method according to claim 3, **characterised in that** a value (F) of the time interval is reduced after a further synchronisation by the controller (13) in the synchronous operating condition.

**5.** Method according to claim 3 or 4, **characterised in that** measurement times (Z1, Z2) equalling earlier event times (E) are determined by the controller (13) in a transitional operating condition of the receiving unit (2) that follows a synchronous operating condition, in which no event time (E) is identified during at least one time interval (F) around an expected subsequent event time (E).

**6.** Method according to one of the claims 1 to 5, **characterised in that** the light beam (4) is sent as pulses modulated in a rectangular form, wherein the controller (13) determines a measuring time (Z1) each from the event times (E) for identifying a measurement value (A1) of a maximum amplitude and a measuring time (Z2) for identifying a measurement value (A1) of a minimum amplitude of the received signal (A).

**7.** Photoelectric sensor with a sending unit (2) for sending a pulsed light beam, with a receiving unit (3) arranged at a distance from the sending unit for receiving the light beam (4) and converting the light beam (4) into a received signal (A), and with an evaluation device for recording measurement values (A1, A2) of the received signal (A), and for synchronising the recording of the measurement values (A1, A2) with the received signal (A), wherein the evaluation unit comprises a flank detector (12), designed for identifying event times (E) of positive flanks and/or negative flanks of pulses of the received signal (A), and the evaluation device comprises a controller (13) connected with the flank detector (12) for receiving the event times (E), and designed for determining a subsequent event time (E) during a time interval (F) around an expected subsequent event time (E) after an event time (E), for carrying out synchronisation if at least two successive event times (E) have been determined, and for determining measurement times (Z1, Z2) for recording measurement values (A1, A2) from the event times (E).

**8.** Photoelectric sensor according to claim 7, **characterised in that** the sending unit (2) is designed for sending the light beam (4) as pulses modulated in a rectangular form, wherein the controller (13) is designed for determining a measurement time (Z1) for identifying a measurement value (A1) of a maximum amplitude and a measurement time (Z2) for identifying a measurement value (A2) of a minimum amplitude of the received signal (A).

## Revendications

**1.** Procédé de fonctionnement d'un capteur photoélectrique, dans lequel un faisceau lumineux pulsé (4) est émis par une unité émettrice (2), qui est reçu et convertie en un signal reçu (A) par une unité réceptrice (3) disposée à distance de l'unité émettrice, dans lequel des valeurs de mesure (A1, A2) du signal reçu (A) sont détectées par un dispositif d'évaluation, et dans lequel la détection des valeurs de mesure (A1, A2) est synchronisé avec le signal reçu (A), et dans lequel des flancs positifs et/ou des flancs négatifs des impulsions du signal reçu (A) sont déterminés par un détecteur des flancs de signal (12) du dispositif d'évaluation des temps d'événement (E),

après un temps d'événement (E), un temps d'événement (E) suivant dans un intervalle temporel (F) autour d'un temps d'événement (E) suivant prévu est déterminé par une unité de commande (13) du dispositif d'évaluation vers laquelle les temps d'événement (E) sont dirigés,

une synchronisation est effectuée par l'unité de commande (13) lorsqu'au moins deux temps d'événement (E) successifs ont été déterminés, et des temps de mesure (Z1, Z2) sont déterminés par l'unité de commande (13) pour acquérir les valeurs de mesure (A1, A2) à partir des temps d'événement (E)

**2.** Procédé selon la revendication 1, **caractérisé en ce que** dans un état de fonctionnement asynchrone de l'unité réceptrice (2), des temps d'événement (E) sont déterminés sans acquérir des valeurs de mesure (A1, A2), jusqu'à ce qu'une synchronisation soit effectuée.

**3.** Procédé selon la revendication 1 ou 2, **caractérisé en ce que** dans un état de fonctionnement synchrone de l'unité réceptrice (2), les valeurs de mesure (A1, A2) sont détectées aux temps de mesure déterminés (Z1, Z2) après au moins une synchronisation.

**4.** Procédé selon la revendication 3, **caractérisé en ce que** dans l'état de fonctionnement synchrone, une valeur (F) de l'intervalle de temps est réduite par l'unité de commande (13) après une synchronisation additionelle.

**5.** Procédé selon la revendication 3 ou 4, **caractérisé en ce que** dans un état de fonctionnement transitoire, qui suit un état de fonctionnement synchrone de l'unité réceptrice (2) dans lequel aucun temps d'événement (E) est déterminé dans au moins un intervalle de temps (F) autour d'un temps d'événement (E) suivant prévu, des temps de mesure (Z1, Z2) correspondant à des temps d'événement (E) antérieurs sont déterminés par l'unité de commande (13).

6. Procédé selon l'une des revendications 1 bis 5, **caractérisé en ce que** le faisceau lumineux (4) est émis sous forme d'impulsions modulées en forme rectangulaire, dans lequel, dans chaque cas, un temps de mesure (Z1) pour établir une valeur de mesure (A1) d'une amplitude maximale et un temps de mesure (Z2) pour établir une valeur de mesure (A1) d'une amplitude minimale du signal reçu (A) sont déterminés par l'unité de commande (13) à partir des temps d'événement (E).

7. Capteur photoélectrique comprenant une unité émettrice (2) pour l'émission d'un faisceau lumineux pulsé, avec une unité réceptrice (3) disposée à distance de l'unité émettrice pour recevoir le faisceau lumineux (4) et pour convertir le faisceau lumineux (4) en un signal reçu (A), et avec un dispositif d'évaluation pour détecter des valeurs de mesure (A1, A2) du signal reçu (A) et pour synchroniser la détection des valeurs de mesure (A1, A2) avec le signal reçu (A), dans lequel le dispositif d'évaluation comprend un détecteur des flancs de signal (12), qui est conçu pour déterminer des temps d'événement (E) des flancs positifs et/ou des flancs négatifs des impulsions du signal reçu (A), en dans lequel le dispositif d'évaluation comprend une unité de commande (13), qui est reliée au détecteur des flancs de signal (12) pour recevoir des temps d'événement (E) et qui est conçue pour déterminer, après un temps d'événement (E), un temps d'événement (E) suivant dans un intervalle temporel (F) autour d'un temps d'événement (E) suivant prévu, et pour effectuer une synchronisation lorsqu'au moins deux temps d'événement (E) successifs ont été déterminés, et pour déterminer des temps de mesure (Z1, Z2) pour acquérir les valeurs de mesure (A1, A2) à partir des temps d'événement (E).

8. Capteur photoélectrique selon la revendication 7, **caractérisé en ce que** l'unité émettrice (2) est conçue pour émettre le faisceau lumineux (4) sous forme d'impulsions modulées en forme rectangulaire, dans lequel l'unité de commande (13) est conçue pour déterminer un temps de mesure (Z1) pour établir une valeur de mesure (A1) d'une amplitude maximale, et pour déterminer un temps de mesure (Z2) pour établir une valeur de mesure (A2) d'une amplitude minimale du signal reçu (A).

Fig. 1

Fig. 2

Fig. 3a

Fig. 3b

Fig. 4

**EP 3 147 694 B1**

**IN DER BESCHREIBUNG AUFGEFÜHRTE DOKUMENTE**

**In der Beschreibung aufgeführte Patentdokumente**

- DE 102011000857
- DE 3118838 C2
- DE 19510304
- WO 2005017471 A